# EUROPEAN PATENT SPECIFICATION

(11) **EP 1 419 358 B1**
(45) Date of publication and mention of the grant of the patent: **20.07.2011**
(21) Application number: 02731044.0
(22) Date of filing: 03.05.2002
(51) Int. Cl.: F41H 11/02

(54) **METHOD FOR DISCHARGING IR AND RADAR COUNTERMEASURE MEANS AND/OR LASER REFLECTORS FROM A DISPENSER INTENDED FOR THE PURPOSE, AND DISPENSER INTENDED FOR DISCHARGING SUCH COUNTERMEASURE**
VERFAHREN ZUM ABSCHIESSEN VON IR- UND RADARGEGENMASSNAHMEMITTELN UND/ODER LASERREFLEKTOREN VON EINER FÜR DIESEN ZWECK BESTIMMTEN ABSCHUSSVORRICHTUNG UND ZUM ABSCHIESSEN SOLCHER GEGENMASSNAHMEN BESTIMMTE ABSCHUSSVORRICHTUNG
PROCEDE DE DECHARGE DE MOYENS DE CONTRE-MESURE IR ET RADAR ET/OU DE REFLECTEURS LASER A PARTIR D'UN DISTRIBUTEUR CONFORME AU BUT RECHERCHE, ET DISTRIBUTEUR REALISANT LA DECHARGE DE TELS MOYENS DE CONTRE-MESURE OU DE REFLECTEURS

(30) Priority: 07.05.2001 SE 0101581; 27.02.2002 SE 0200597
(43) Date of publication of application: 19.05.2004
(73) Proprietor: SAAB AB, 581 88 Linköping (SE)
(72) Inventor: ZÄTTERQVIST, Christer, S-757 56 Uppsala (SE); FRIEDE, Johan, S-165 65 Hässelby (SE)
(74) Representative: Norberg, Charlotte
(86) International application number: PCT/SE2002/000851
(87) International publication number: WO 2002/093102

(56) References cited:
- SE-B- 446 771
- SE-B- 469 196

## Description

The present invention relates to a method for discharging countermeasure means, such as radar chaff or hot IR chaff, laser reflectors or equivalent from an electromechanical dispenser arrangement. The invention also relates to a dispenser arrangement designed in accordance therewith.

The most serious threat to modern fighter aircraft and transport aircraft is the self-guiding missile equipped with radar, IR or laser sensors, which can be fired either from enemy aircraft or from the ground. In order to protect own aircraft, these are therefore now normally provided with equipment so as to be capable, when they are attacked or fear attack, of dispensing various types of countermeasure means. An example of such equipment is the BOL dispenser produced and patented by ourselves. In this connection, reference may be made to our US patents 4 417 709 and 4 650 092. By means of this type of dispenser, the dispensing of countermeasure means can be simply controlled and adapted to the threat situation existing at the time. A very common form of our dispenser, which is of electromechanical type, is the kind which is built into the load-bearing beam of the aircraft and can therefore serve as a mounting for other load at the same time. This type of countermeasure dispenser, which has become widely used within a large number of different air forces, nevertheless has the disadvantage that the quantity of countermeasure means it can contain is limited by the normal outer dimensions of the load-bearing beam. Given that the various sensors of the missiles are becoming increasingly sophisticated, however, demands are becoming more exacting with regard to the quantity of countermeasure means necessary for each protective action and the rapidity with which the countermeasure means have to be spread in order for it to be possible for the sensors of an attacking missile to be deceived and the own aircraft to manage to move out of the way. At the same time, access to various missile weapons has increased markedly, as a result of which the need for it to be possible to perform more or longer protective actions within one and the same mission has increased to a corresponding extent.

The present invention therefore relates to an improved discharging method and an improved type of spreader for countermeasure means adapted for a greater quantity of countermeasure means carried, which thus makes possible more or longer countermeasure actions one after another. The countermeasure types principally concerned in this connection are conventional radar chaff made chiefly from aluminized foil or fibres, hot IR chaff, and also laser-reflecting fibres or foils.

With the present invention, a cloud or a screen of protective means is therefore produced around the carrier aircraft by means of a method which involves unit-packed countermeasure means being spread successively but in one and the same operation from a number of magazines arranged parallel to one another, spreading taking place in a laterally directed manner transversely to the flying direction of the aircraft serving as the carrier. In this connection, each magazine is given its own discharging direction which preferably extends radially outwards from a common main axis, the discharging directions also being uniformly distributed all the way around. As the unit packs are designed in such a manner that, as soon as they have left the spreader, they will be broken up by the relative wind and thus in turn spread their contents, a protective cloud is thus produced rapidly, which conceals the carrier aircraft and confuses missiles aimed at it.

Inside each magazine included in the arrangement according to the invention, a simple feed spring, for example, can serve for feeding the unit countermeasure packs to a discharging location specific to the magazine in question. Provided that the discharging locations of all the magazines are arranged in one and the same transverse plane arranged transversely to the flying direction of the aircraft, one and the same rotating discharger or ejector can be used for successively, as it passes the magazines, ejecting the countermeasure pack next in order located there. If it is desirable to use this variant, the various magazines should therefore be arranged parallel to one another around a centre axis, the centre axis also constituting a bearing point for the rotating discharger which can itself be in the form of a cam which, during its rotation past a countermeasure pack present in each discharging location, moves the pack in the discharging direction until it has completely left the discharging location. In order to bring about the desired radial discharge, the various countermeasure packs should also be guided up in the desired discharging direction until the moment when these have completely left the spreader. In this connection, the various countermeasure packs are preferably arranged stacked on top of one another in the magazines, with their respective greatest extents lying in the lateral direction transversely to the feed direction of the dispenser. The spreading of the countermeasure packs is thus carried out in the longitudinal direction of the packs, that is to say transversely to the feed direction of the magazines.

The spreader arrangement described above in terms of its basic principles therefore comprises a number of magazines arranged parallel to one another around a central axis, and an ejector arranged rotatably about this axis. It should be possible for the whole of this arrangement, without major problems, to be built into one of the rocket capsules intended for originally unguided attack rockets, which are available in great numbers for most combat and transport aircraft in service today. This could be a good use for at least some surplus rocket capsules, of which there must be many because, in the current situation with existing anti-aircraft missiles, it is only entirely unprotected targets which are likely to be attacked using unguided attack rockets. If rebuilding such a rocket capsule for this purpose is anticipated, it may be necessary to manufacture a new nose cone for the capsule because the nose cone, in the original state, is often discarded before the rockets are fired, but, when used as a countermeasure dispenser, the nose cone needs only to be provided with discharger openings adapted to the intended dispensing directions, if the dispensing of countermeasure means takes place in the front part of the dispenser.

A further improvement of the spreading of countermeasure means can also be brought about by arranging angled swirl plates in close proximity to the discharging openings through which the countermeasure packs leave the spreader. By means of such swirl plates, a turbulent air flow is brought about just around the discharging opening of the spreader, and the spreading of the countermeasure means itself is thus improved as soon as it has left its unit pack. Especially in the case of rapid combat aircraft, it will probably also be suitable to arrange some sort of wind deflector in the flying direction of the plane in front of each discharging opening, because the unit packs could otherwise, in spite of high discharging speed, be broken by the relative wind even before they have completely left their discharging opening. In this connection, these wind deflectors can be in the form of a bellied projection, a guide rail in the form of an angled plate or equivalent.

As already indicated, the dispenser arrangement according to the invention can be contained in a carrier with in principle the same outer configuration as conventional rocket launchers or consisting of a rebuilt rocket launcher of such a type, of which there have long been great quantities intended for all combat and transport aircraft in service. The carrier is therefore in the form of an oblong cylindrical capsule, and this shape provides room for a number of magazines arranged side by side extending in the longitudinal direction of the capsule and also a drive arrangement, arranged centrally in the middle of the capsule, for a rotating discharger which, when it is activated, during its rotation successively ejects one after another the unit countermeasure packs which lie next in order in the discharging locations of the magazines. The actual discharging of the unit countermeasure packs, which according to the invention is to take place radially in relation to the longitudinal axis of the carrier capsule, can of course be arranged in either the front or the rear end of the carrier capsule and/or somewhere in between.

In an especially preferred arrangement, magazines of standard countermeasure packs are therefore arranged around a central space, in which the drive arrangement for the rotating discharger is arranged, and, at the same time, each of the magazines is provided with its own discharging location, and all these discharging locations are positioned in a common plane which is arranged transversely to the discharging direction of the magazines and in which the discharger also rotates when it is activated. With this setup, a single discharger can therefore serve all the magazines by, during its rotation, successively passing the discharging locations of the various magazines. Each magazine then has its own guide path for controlling the general ejection of the countermeasure packs, while the feed of the unit packs within each magazine can be effected by means of separate feed springs or by a common ball screw which, by means of separate feed arms, effects the feed of the countermeasure packs within all the magazines.

The packs can contain previously known types of interference material and reflective material as mentioned above, and, when these packs have left the spreader, they open and form material clouds capable of diverting the threat concerned.

The invention is not limited to the embodiments shown above by way of example but can undergo modifications within the scope of the patent claims below.

The invention will be described in greater detail below by means of illustrative embodiments with reference to accompanying drawings, in which:
Figure 1 shows a spreader for countermeasure means with a partly cut-away nose cone,
Figure 2 shows on larger scale a cross section along the line II-II in Figure 1,
Figure 3 shows the section III-III in Figure 2,
Figure 4 shows a special type of wind deflector at the discharging openings as protection during discharging, and swirl plates for improving the spreading of the countermeasure means,
Figure 5 shows a unit countermeasure pack, and
Figure 6 shows in a general manner the use of the arrangement according to the invention.

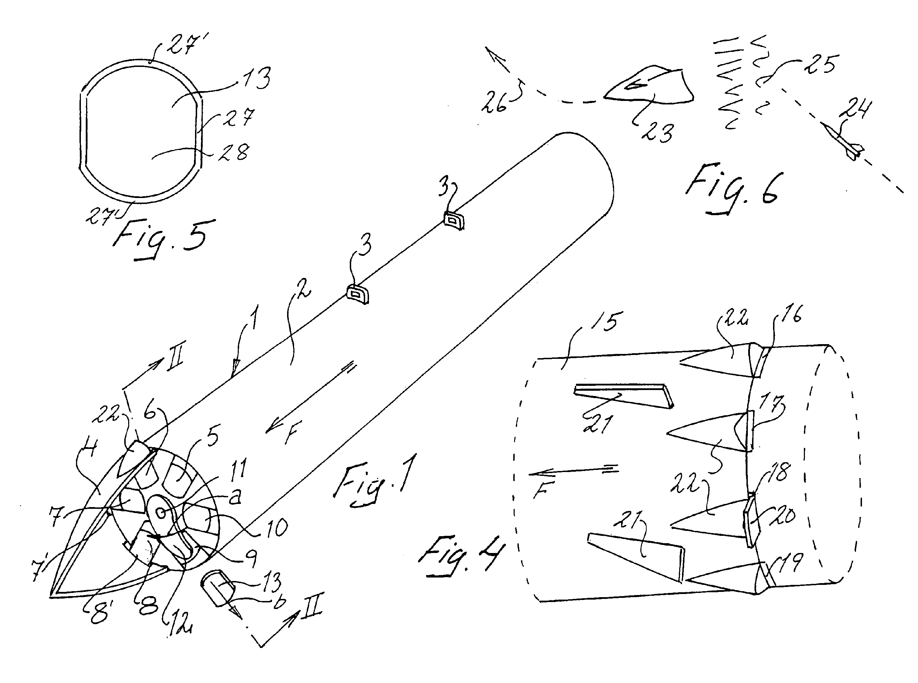

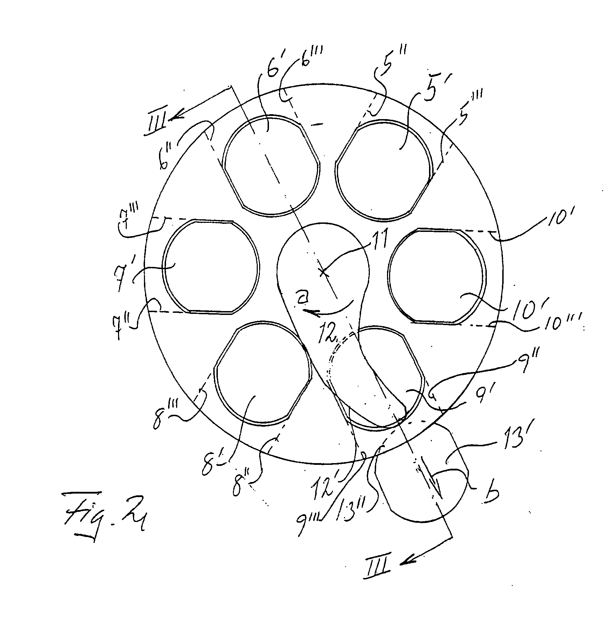

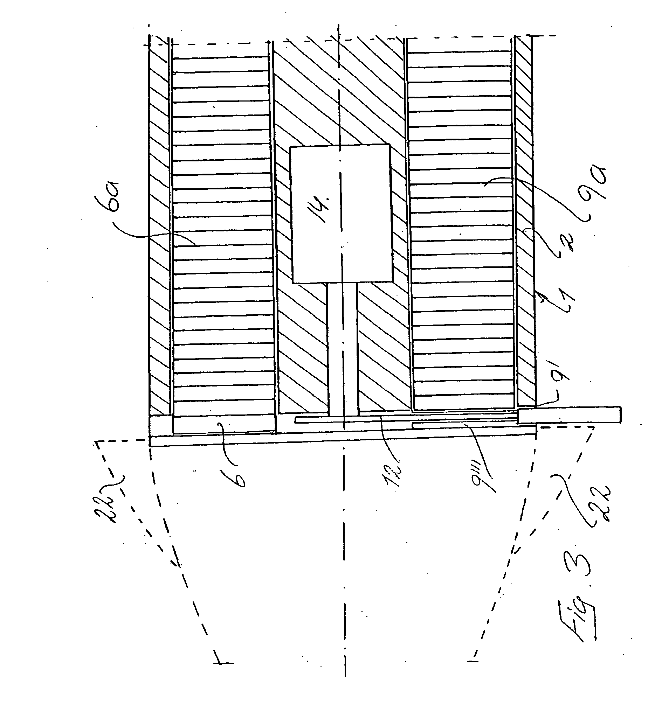

The spreader 1 for countermeasure means shown in Figure 1 has a circular cylindrical main body 2 with mounting and connecting eyes 3 and also a partly cut-away front nose cone 4, inside which it is possible to observe the discharging locations 5-10 for six different magazines which are arranged in the longitudinal direction of the body and have been given the references 5a-10a although only 6a and 9a are actually visible in Figure 3. Figures 1, 2 and 3 also show a discharger 12 which can rotate about a central axis 11 and, when it rotates past the discharging location of each magazine in the direction of the arrow a, accelerates a unit countermeasure pack 13 present there in the radial direction to a sufficient speed for the latter to leave the countermeasure spreader via a discharging opening 5'-10' corresponding to the magazine concerned. The discharging direction of the unit pack 13 is indicated by the arrow b in Figure 2.

For further details, reference is also made to Figure 2 and Figure 3 in addition to Figure 1, corresponding components having the same references irrespective of the different scale of the figures. The rotating discharger 12 therefore has a curved front edge 12' which, during its rotation, is brought into contact with the curved inner edge, here 13", of the unit countermeasure pack 13'. By virtue of the front edge 12' of the discharger being designed in such a manner that its contact with the curved end edge 27' (see Figure 5) of the unit pack is progressively displaced from its outer edge towards its centre during continuous lengthening of the lever formed by the discharger from its centre of rotation to the edge of the pack, the unit pack will be moved in the discharging direction until it completely leaves the spreader.

As can be seen from Figure 2 and, to a lesser extent, from Figure 3, guide edges 5" -10" and 5"' -10"' are arranged along the discharging directions originating from each magazine. Furthermore, the direction of rotation of the discharger 12 is designated by a, and the discharging direction of the countermeasure pack 13 and 13' by b.

In Figure 3, the drive motor 14 of the discharger 12 is also shown.

As far as Figure 4 is concerned, this figure shows a variant in which the discharging opening of each magazine is arranged along a cylindrical part of the carrier body 15. Also shown are four discharging openings 16-19 for spreading countermeasure means, a unit countermeasure pack 20 on the way out of the opening 18, and two swirl plates 21 arranged close to the discharging openings for the purpose of increasing the turbulence in the air next to the discharging openings in order in this way to speed up the spreading of the countermeasure means. There are also wind deflectors in the form of projections 22 arranged on the wind side or the side facing the air flow at each of the discharging openings 16-19. The purpose of these wind deflectors is to prevent the inherently very delicate unit packs being broken before they have had time completely to leave the spreader. In the figures, these wind deflectors have been shown as streamlined projections but they can actually have any shape.

Figure 5 shows a unit pack 13 of any type of countermeasure means. It consists of an outer frame 27 with curved end edges 27' surrounding a central portion 28 containing countermeasure material, preferably in the form of fine fibres or pieces of foil packed transversely to the main plane of the pack. The intention is that the countermeasure material should leave the frame as soon as the pack has left the spreader.

Finally, Figure 6 gives a small-scale indication of how the invention is used, even though this is per se previously known art. Accordingly, the aircraft 23 has had a radar-guided missile 24 fired at it and has in this connection spread the countermeasure cloud 25 at the same time as the pilot of the aircraft 23 prepares and performs an evasive manoeuvre 26. In this connection, the intention is that the missile 24 will then go towards the decoy formed by the countermeasure cloud 25.

## Claims

1. Method for, from a secondary carrier (2), in the form of a load capsule or equivalent, arranged on a carrier craft, in the form of an aircraft or equivalent, spreading a countermeasure means arranged initially in unit packs (13, 13' and 20) and intended, after the contents of the unit packs have left the latter outside the secondary carrier, to screen the carrier craft (23) or form a decoy in order to deceive or confuse a threat aimed at the carrier craft; wherein the unit countermeasure packs (13, 13' and 20) are spread mechanically from the carrier (2) from a number of magazines via discharging locations (5-10, 5'-10') specific to each of the magazines (5a-10a), in which locations the unit packs (13, 13' and 20) are given a defined spreading direction (A) transverse to the flying direction (F) of the carrier craft, **characterized in that** at least two of the discharging locations (5-10 and 5'-10') for the magazines included in the carrier are arranged in one and the same plane transverse to the main flying direction of the carrier (2) and are served by one and the same rotating discharger (12) which is made successively to pass the discharging locations (5-10 and 5'-10') of the magazines and in this connection give the unit packs (13, 13' and 20) next in order in each of the magazines the speed necessary for discharge.

2. Method according to claim 1, **characterized in that** the unit packs (13, 13' and 20) from the various discharging locations are successively spread radially with regard to a common axis (11), the spreading directions of all the magazines being arranged in such a manner that together they cover at least most of the way around the carrier (23).

3. Arrangement for, from a secondary carrier (2), in the form of a load capsule or equivalent, arranged on a carrier craft (23), in the form of an aircraft or equivalent, spreading a countermeasure means arranged initially in unit packs (13, 13' and 20) and intended, after the contents of the unit packs have left the packs outside the secondary carrier, to screen the carrier craft (23) or form a decoy in order to deceive or confuse a threat aimed at the carrier craft; the arrangement comprising a number of magazines (5a-10a) arranged side by side for feeding unit countermeasure packs (13, 13' and 20) to a discharging location (5-10 and 5'-10') defined for each magazine, the discharging locations of a number of magazines included in the carrier being arranged in one and the same plane which, with the carrier interconnected with the carrier craft, lies transversely to the main flying direction of the carrier craft and within which plane each magazine has been designed with its own radial discharging direction (b), **characterized in that** all the magazines included in the carrier are arranged around a central axis (11) which also constitutes a bearing for a rotating discharger (12) which, when it is activated, successively passes the discharging location (5-10 and 5'-10') of each of the magazines and there gives the unit packs (13; 13' and 20) next in order the necessary discharging speed in the relevant discharging direction for the magazine concerned.

4. Arrangement according to claim 3, **characterized in that** the discharging directions of the magazines are arranged in such a manner that all the discharging directions together cover most of the way around.

5. Arrangement according to claim 3, **characterized in that** the rotating discharger (12) is in the form of a single-bladed or multi-bladed plane propeller with a front edge (12') which is curved in its direction of rotation and which, during its rotation past the discharging location (5-10 and 5'-10') of each of the magazines, strikes the respective unit packs (13, 13' and 20) with a lever, which is continuously increasingly long at least during part of the discharge, and thus progressively moves the unit pack in the discharging direction until the unit pack has left the discharging location.

6. Arrangement according to claim 3 or 5, **characterized in that** unit packs (13, 13' and 20) included therein have a curved contact surface facing the rotating discharger (12).

7. Arrangement according to any one of claims 3, 5 and 6, **characterized in that** the magazines and the discharger (12) are arranged in such a manner in the carrier (2) that the discharge takes place in at least one place along the long side of the carrier, the magazines being arranged in its longitudinal direction and the feed of new unit packs in the magazines to the discharging location of each of the magazines consequently taking place in or towards the flying direction of the carrier craft.

8. Arrangement according to any one of claims 3-7, **characterized in that** wind deflectors (22) are arranged on the wind side of each of the discharging openings in order to prevent the countermeasure packs being broken before they have had time completely to leave the discharging openings.

9. Arrangement according to any one of claims 3-8, **characterized in that** angled swirl plates (21, 22) are arranged on the outside of the carrier close to the discharging openings for the unit countermeasure packs in order to facilitate the spreading of countermeasure means (20).

## Patentansprüche

1. Verfahren zum Streuen von Mitteln, von einem sekundären Träger (2) in der Form einer Transportkapsel oder eines Äquivalents, welche an einem Transportvehikel in der Form eines Luftfahrzeugs oder eines Äquivalents vorgesehen ist, für eine Gegenmaßnahme, die ursprünglich in Einheitsbehältern (13, 13' und 20) vorgesehen sind und die beabsichtigt sind, nachdem der Inhalt der Einheitsbehälter die letzteren bezüglich des sekundären Trägers nach außen verlassen hat, das Transportvehikel (23) zu schützen oder ein Täuschungsmittel auszubilden, um eine Bedrohung, welche auf das Transportvehikel gerichtet ist, zu täuschen oder zu irritieren;
wobei die Gegenmaßnahme-Einheitsbehälter (13, 13' und 20) von dem Träger (2) aus einer Anzahl von Magazinen über Abgabestellen (5 - 10, 5' - 10') mechanisch gestreut werden, die bezüglich der Magazine (5a - 10a) spezifisch sind, wobei den Einheitsbehältern (13, 13' und 20) in den Stellen eine definierte Streurichtung (A) quer zur Flugrichtung (F) des Trägervehikels vermittelt wird, **dadurch gekennzeichnet, dass**
wenigstens zwei der Abgabestellen (5 - 10 und 5' - 10') für die Magazine, die in dem Träger enthalten sind, in ein und derselben Ebene quer zur Hauptflugrichtung des Trägers (2) vorgesehen sind und von ein und demselben Drehentlader (12) versorgt werden, der veranlasst wird, die Abgabestellen (5 - 10 und 5' - 10) der Magazine nacheinander zu durchlaufen und den Einheitsbehältern (13, 13' und 20), die in der Reihenfolge als nächstes dran sind, in jedem der Magazine in diesem Zusammenhang die notwendige Geschwindigkeit für die Abgabe zu verleihen.

2. Verfahren nach Anspruch 1, **dadurch gekennzeichnet, dass** die Einheitsbehälter (13, 13' und 20) nacheinander von den verschiedenen Abgabestellen bezüglich einer gemeinsamen Achse (11) radial gestreut werden, wobei die Verteilungsrichtungen aller Magazine auf eine solche Weise vorgesehen sind, dass diese zusammen wenigstens den größten Teil des Wegs um das Transportvehikel (23) herum abdecken.

3. Anordnung zum Streuen von Mitteln einer Gegenmaßnahme, von einem sekundären Träger (2) in der Form einer Transportkapsel oder eines Äquivalents, welche an einem Trägervehikel (23) in der Form eines Luftfahrzeugs oder eines Äquivalents vorgesehen ist, die ursprünglich in Einheitsbehältern (13, 13' und 20) vorgesehen sind und beabsichtigt sind, nachdem der Inhalt der Einheitsbehälter die Behälter bezüglich des sekundären Trägers nach außen verlassen hat, das Transportvehikel (23) zu schützen oder ein Täuschungsmittel auszubilden, um eine Bedrohung, die auf das Trägervehikel gerichtet ist, zu täuschen oder zu irritieren;
wobei die Anordnung eine Anzahl von Magazinen (5a - 10a) aufweist, die Seite an Seite zum Zuführen von Gegenmaßnahme-Einheitsbehältern (13, 13' und 20) an eine Abgabestelle (5 - 10 und 5' - 10') angeordnet sind, die für jedes Magazin definiert ist, wobei die Abgabestellen einer Anzahl von Magazinen, die in dem Träger enthalten sind, in ein und derselben Ebene angeordnet sind, die, wobei der Träger mit dem Transportvehikel verbunden ist, quer zur Hauptflugrichtung des Transportvehikels liegt und wobei in dieser Ebene jedes Magazin mit seiner eigenen radialen Abgaberichtung (b) ausgelegt ist, **dadurch gekennzeichnet, dass**
alle Magazine, die in dem Träger enthalten sind, um eine zentrale Achse (11) herum angeordnet sind, die auch ein Lager für einen Drehentlader (12) bildet, der, wenn dieser betrieben wird, die Abgabestellen (5 - 10 und 5' - 10') jedes Magazins nacheinander durchläuft und dort den Einheitsbehältern (13; 13' und 20), die in der Reihenfolge als nächstes dran sind, die notwendige Abgabegeschwindigkeit in der relevanten Abgaberichtung für das betreffende Magazin vermittelt.

4. Anordnung nach Anspruch 3, **dadurch gekennzeichnet, dass** die Abgaberichtungen der Magazine auf eine solche Weise ausgerichtet sind, dass alle Abgaberichtungen gemeinsam den größten Teil des Weges drumherum abdecken.

5. Anordnung nach Anspruch 3, **dadurch gekennzeichnet, dass** der Drehentlader (12) in der Form eines ebenen Einblatt- oder Mehrblattpropellers mit einer Vorderkante (12') vorliegt, die in dessen Drehrichtung gekrümmt ist, und die, während dessen Drehung hinter den Abgabestellen (5 - 10 und 5' - 10') jedes der Magazine, auf die entsprechenden Einheitsbehälter (13, 13' und 20) mit einem Hebel trifft, der zumindest während eines Teils der Abgabe kontinuierlich zunehmend lang ist, und somit den Einheitsbehälter in der Abgaberichtung schrittweise bewegt, bis der Einheitsbehälter die Abgabestelle verlassen hat.

6. Anordnung nach Anspruch 3 oder 5, **dadurch gekennzeichnet, dass** die Einheitsbehälter (13, 13' und 20), die darin enthalten sind, eine gekrümmte Kontaktfläche aufweisen, welche dem Drehentlader (12) zugewandt ist.

7. Anordnung nach einem der Ansprüche 3, 5 und 6, **dadurch gekennzeichnet, dass** die Magazine und der Entlader (12) auf eine solche Weise in dem Träger (2) angeordnet sind, dass die Abgabe an wenigstens einer Stelle entlang der langen Seite des Trägers stattfindet, die Magazine in deren Längsrichtung angeordnet sind und die Zufuhr der neuen Einheitsbehälter in den Magazinen an die Abgabestellen jedes der Magazine infolgedessen in oder zur Flugrichtung des Transportvehikels stattfindet.

8. Anordnung nach einem der Ansprüche 3 bis 7, **dadurch gekennzeichnet, dass** Winddeflektoren (22) auf der Windseite jeder der Abgabeöffnungen vorgesehen sind, um ein Bersten der Gegenmaßnahme-Behälter zu vermeiden, bevor diese Gelegenheit hatten, die Abgabeöffnungen vollständig zu verlassen.

9. Anordnung nach einem der Ansprüche 3 bis 8, **dadurch gekennzeichnet, dass** abgewinkelte Verwirbelungsplatten (21, 22) auf der Außenseite des Trägers in der Nähe der Abgabeöffnungen für die Gegenmaßnahme-Einheitsbehälter angeordnet sind, um das Streuen der Mittel der Gegenmaßnahme (20) zu vereinfachen.

## Revendications

1. Méthode pour, à partir d'un dispositif porteur secondaire (2), sous forme de capsule de charge ou équivalent, agencé sur un véhicule porteur, sous forme d'aéronef ou équivalent, diffuser un moyen de contre-mesure agencé initialement dans des conditionnements unitaires (13, 13' et 20) et prévu, après que les contenus des conditionnements unitaires ont quitté ces derniers à l'extérieur du dispositif porteur secondaire, pour cacher le véhicule porteur (23) ou former un leurre afin de duper ou de perturber une menace braquée sur le véhicule porteur ; dans laquelle les conditionnements de contremesure unitaires (13, 13' et 20) sont diffusés mécaniquement à partir du dispositif porteur (2) à partir d'un nombre de magasins par l'intermédiaire d'emplacements de décharge (5 à 10, 5' à 10') spécifiques à chacun des magasins (5a à 10a), dans lesquels emplacements une direction de diffusion définie (A) transversale à la direction de vol (F) du véhicule porteur est attribuée aux conditionnements unitaires (13, 13' et 20), **caractérisée en ce qu'**au moins deux des emplacements de décharge (5 à 10 et 5' à 10') pour les magasins inclus dans le dispositif porteur sont agencés dans un seul et unique plan transversal à la direction de vol principale du dispositif porteur (2) et sont servis par un seul et unique déchargeur rotatif (12) qui doit passer successivement devant les emplacements de décharge (5 à 10 et 5' à 10') des magasins et fournir, à cet égard, aux conditionnements unitaires (13, 13' et 20) suivants dans l'ordre dans chacun des magasins, la vitesse nécessaire pour la décharge.

2. Méthode selon la revendication 1, **caractérisée en ce que** les conditionnements unitaires (13, 13' et 20) à partir des divers emplacements de décharge sont diffusés successivement de façon radiale par rapport à un axe commun (11), les directions de diffusion de tous les magasins étant agencées de manière telle que, ensemble, elles couvrent au moins la plupart de l'espace autour du dispositif porteur (23).

3. Agencement pour, à partir d'un dispositif porteur secondaire (2), sous forme de capsule de charge ou équivalent, agencé sur un véhicule porteur (23), sous forme d'aéronef ou équivalent, diffuser un moyen de contre-mesure agencé initialement dans des conditionnements unitaires (13, 13' et 20) et prévu, après que les contenus des conditionnements unitaires ont quitté les conditionnements à l'extérieur du dispositif porteur secondaire, pour cacher le véhicule porteur (23) ou former un leurre afin de duper ou de perturber une menace braquée sur le véhicule porteur, l'agencement comprenant un nombre de magasins (5a à 10a) agencés côte à côte pour fournir des conditionnements de contre-mesure unitaires (13, 13' et 20) à un emplacement de décharge (5 à 10 et 5' à 10') défini pour chaque magasin, les emplacements de décharge d'un nombre de magasins inclus dans le dispositif porteur étant agencés dans un seul et unique plan qui, avec le dispositif porteur relié de façon réciproque au véhicule porteur, est transversal à la direction de vol principale du véhicule porteur et au sein duquel plan chaque magasin a été conçu avec sa propre direction de décharge radiale (b), **caractérisé en ce que** tous les magasins inclus dans le dispositif porteur sont agencés autour d'un axe central (11) qui constitue également un palier pour un déchargeur rotatif (12) qui, lorsqu'il est activé, passe successivement devant l'emplacement de décharge (5 à 10 et 5' à 10') de chacun des magasins et là fournit aux conditionnements unitaires (13, 13' et 20) suivants dans l'ordre la vitesse de décharge nécessaire dans la direction de décharge pertinente pour le magasin concerné.

4. Agencement selon la revendication 3, **caractérisé en ce que** les directions de décharge des magasins sont agencées de manière telle que toutes les directions de décharge couvrent, ensemble, la plupart de l'espace tout autour.

5. Agencement selon la revendication 3, **caractérisé en ce que** le déchargeur rotatif (12) est sous forme d'hélice d'avion à une seule pale ou à pales multiples avec un bord avant (12') qui est incurvé dans sa direction de rotation et qui, au cours de sa rotation devant l'emplacement de décharge (5 à 10 et 5' à 10') de chacun des magasins, frappe les conditionnements unitaires respectifs (13, 13' et 20) avec un levier, qui est de plus en plus long en continu au moins au cours d'une partie de la décharge, et ainsi déplace progressivement le conditionnement unitaire dans la direction de décharge jusqu'à ce que le conditionnement unitaire ait quitté l'emplacement de décharge.

6. Agencement selon la revendication 3 ou 5, **caractérisé en ce que** des conditionnements unitaires (13, 13' et 20) inclus dans celui-ci possèdent une surface de contact incurvée faisant face au déchargeur rotatif (12).

7. Agencement selon l'une quelconque des revendications 3, 5 et 6, **caractérisé en ce que** les magasins et le déchargeur (12) sont agencés de manière telle, dans le dispositif porteur (2), que la décharge a lieu dans au moins un endroit le long du côté long du dispositif porteur, les magasins étant agencés dans sa direction longitudinale et la fourniture de nouveaux conditionnements unitaires dans les magasins à l'emplacement de décharge de chacun des magasins ayant par conséquent lieu dans ou vers la direction de vol du véhicule porteur.

8. Agencement selon l'une quelconque des revendications 3 à 7, **caractérisé en ce que** des déflecteurs d'air (22) sont agencés sur le côté air de chacune des ouvertures de décharge afin d'empêcher les conditionnements de contre-mesure d'être rompus avant qu'ils n'aient eu complètement le temps de quitter les ouvertures de décharge.

9. Agencement selon l'une quelconque des revendications 3 à 8, **caractérisé en ce que** des plaques de tourbillonnement inclinées (21, 22) sont agencées sur l'extérieur du dispositif porteur près des ouvertures de décharge pour les conditionnements de contremesure unitaires afin de faciliter la diffusion de moyen de contre-mesure (20).
